# EUROPEAN PATENT APPLICATION

(11) **EP 1 659 499 A1**
(43) Date of publication of application: **24.05.2006**
(21) Application number: 04257078.8
(22) Date of filing: 16.11.2004
(51) Int. Cl.: G06F 13/38, G06F 13/40

(54) **Bus integrating system**

(71) Applicant: RDC Semiconductor Co., Ltd., Hsin Chu, Taiwan (TW)
(72) Inventor: Tsai, Chih-Fu, 6-1F, Hsin Chu Taiwan (CN); Hsieh, Chien-Min, 6-1F, Hsin Chu Taiwan (CN)
(74) Representative: Skone James, Robert Edmund

(57) **Abstract**

A bus integrating system (100) is applied to a data processing system. A bus controlling module (110) is coupled to at least one peripheral device for enabling a corresponding device to access data according to a data access request signal sent from the peripheral device. A bus integrating processor (120) includes at least one first bus data access signal pin and at least one second bus data access signal pin (112), so as to allow the bus controlling module to control peripheral devices connected to buses of a first data transmission standard and a second data transmission standard to perform data access with another peripheral device of the same and different data transmission standard via the single bus integrating processor. Thereby, the bus integrating system (100) allows buses with different data transmission standards to transmit data via a single bus and the integrating bus controlling module.

## Description

### FIELD OF THE INVENTION

The present invention relates to bus integrating systems, and more particularly, to a bus integrating system that integrates buses with different data transmission standards.

### BACKGROUND OF THE INVENTION

Bus is a set of electrical circuits established between various computer elements, which is used to transmit data between the computer elements. In fact, the bus can be considered as a shared highway between data users or providers, connecting different portions of a computer system to each other, such as a CPU (central processing unit), memory, disc player, printer, image system, I/O (input/output) ports, etc. The bus not only electrically connects different components and devices together but also transmits data. The bus is managed by the CPU often through a bus controller. The amount of data that can be transmitted in a period of time through a single bus is determined by the amount of shifting binary electrical signals, that is, the speed at which the signals are switched and the number of signal lines involved. Usually there are four buses in a PC (personal computer): a processor bus, a memory bus, an address bus, and an I/O bus.

Take the above I/O bus as an example, also called an expansion bus, it typically allows PC users to self-install peripheral devices such as a display card, printer and/or CD-ROM drive using standard connectors, such that the I/O bus is deemed most commonly used among the various types of buses. Conventional buses can be divided in architecture into the Industry Standard Architecture (ISA) bus, the Micro Channel Architecture (MCA) bus, the Extended Industry Standard Architecture (EISA) bus, the Video Electronics Standard Association (VESA) local bus, the Peripheral Component Interconnect (PCI) local bus, and the Accelerated Graphics Port (AGP) bus, etc.

Specification for the above PCI local bus is established by Intel Company. The specification defines several PCI-compatible expansion cards to be installed in a local bus system in the computer. The PCI controller and the CPU decide whether to transmit 32-bits or 64-bits data at a time depending on execution conditions, and allow several intelligent PCI-compatible expansion cards to simultaneously perform tasks with the CPU using bus mastering technology. Since the PCI specification utilizes multiplexing technology to permit more than one PCI-compatible device to exist on the bus, it is known as a "shared bus".

Apart from the buses designed for standard PCs, there is another shared standard for installing PC cards in a bus slot designed for notebook computers, laptop computers, palm computers and other portable computers, and intelligent electronic devices. Such standard is a peripheral device connecting standard developed by the Personal Computer Memory Card International Association (PCMCIA). It uses removable PC cards having about the size of a credit card, which are inserted into PCMCIA slots for use. The PCMCIA bus standard for a 32-bit PC card is called the CardBus standard. Unlike the multiplexing technology that permits more than one PCI-compatible device to exist and share the same PCI local bus, a single host bridge only allows a single CardBus device to be connected thereto, and thus it is known as a point-to-point bus.

Accordingly, although the PCI local bus and the bus of the CardBus standard differ on whether more than one electronic device can be connected thereto, the manner in which the systems are operated and configured is very similar. However, these two buses still use different controllers and different signal buses to communicate with the CPU. If these two bus architectures with different standards can be integrated, hardware space occupied and manufacturing costs would be reduced. Therefore, the problem to be solved here is to integrate these two types of buses.

### SUMMARY OF THE INVENTION

In light of the drawbacks in the prior art, a primary objective of the present invention is to provide a bus integrating system that allows bus architectures with different data transmission standards but similar transmission protocols to perform data access control for peripheral devices via a single bus and an integrating bus controlling module.

Another objective of the present invention is to provide a bus integrating system, which allows a point-to-point data transmission bus architecture to perform shared data access control for peripheral devices via a single bus and an integrating bus controlling module.

In order to achieve the above and other objectives, the present invention proposes a bus integrating system comprising a bus controlling module and a bus integrating processor. The bus controlling module is coupled to at least one peripheral device and enables a corresponding device to access data according to a data access request signal generated from the peripheral device. The bus integrating processor includes at least one first bus data access signal pin and at least one second bus data access signal pin. This allows the bus controlling module to control peripheral devices connected to buses of a first data transmission standard and a second data transmission standard to perform data access with another peripheral device of the same or different data transmission standard via the single bus integrating processor.

Compared to the conventional bus control system architecture, the bus integrating system in the present invention allows bus architectures with different data transmission standards to perform data access control for peripheral devices via a single integrating bus controlling module. Moreover, the bus integrating system in the present invention allows a bus architecture that originally performs data transmission in a point-to-point manner to perform data access control for peripheral devices in a shared manner via the single integrating bus controlling module. As a result, occupied hardware space and manufacturing costs can be reduced.

### BRIEF DESCRIPTION OF THE DRAWINGS

The present invention can be more fully understood by reading the following detailed description of the preferred embodiments, with reference made to the accompanying drawings, wherein:
Fig. 1 is a schematic block diagram showing architecture of a bus integrating system according to the present invention; and
Fig. 2 is a waveform diagram of the bus integrating system during data transmission with peripheral devices.

### DETAILED DESCRIPTION OF THE PREFERRED EMBODIMENT

In the following embodiments, a bus integrating system proposed in the present invention can be applied to an electronic product such as a personal computer, notebook computer, palm computer, personal digital assistant, flat panel computer, server system, workstation, digital home appliance, mobile equipment, communication equipment, multimedia equipment, medical equipment, or automated control equipment. The electronic product comprises a PCI local bus system and a CardBus system. The PCI local bus system allows users to install an expansion card, such as a network card and/or a display card, compatible with the PCI data transmission standard via a PCI slot. Similarly, the CardBus system allows the users to install a PC card compatible with the PCMCIA standard via a PCMCIA slot, wherein in this embodiment, the PC card is of the 32-bit standard. Since the bus architectures of PCI and CardBus are well known, only the parts relevant to the bus integrating system according to the present invention are described hereinafter.

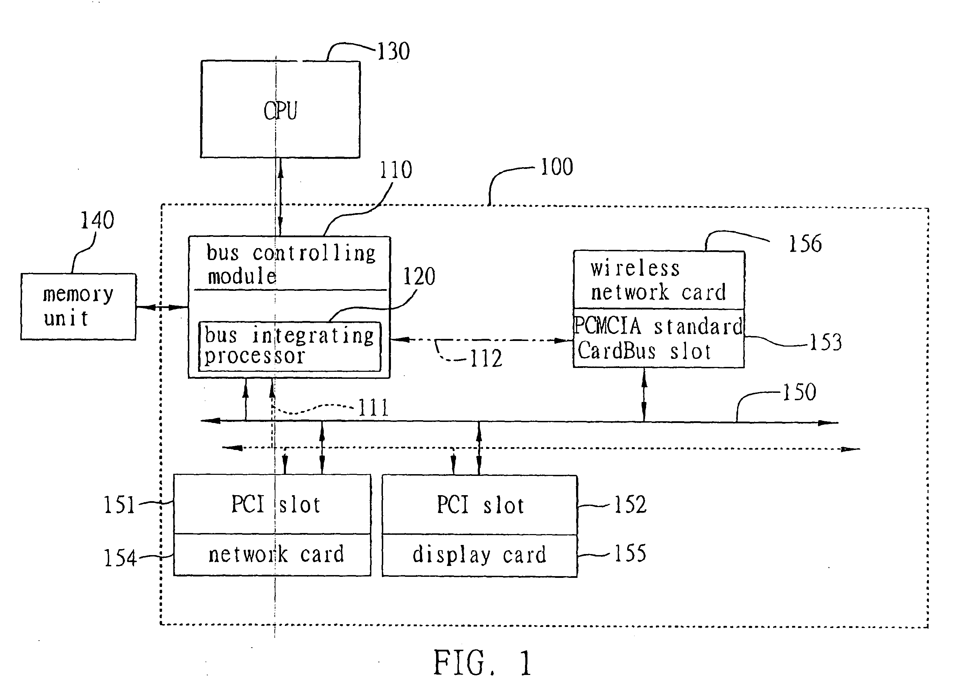

Referring to Fig. 1 showing the architecture of the bus integrating system 100 in the present invention, the bus integrating system 100 comprises: a bus controlling module 110 and a bus integrating processor 120.

The bus controlling module 110 is coupled to a CPU 130, a memory unit 140, and a PCI bus 150 respectively. The bus controlling module 110 enables data access between the CPU 130, the memory unit 140, and peripheral devices. In this embodiment, the bus controlling module 110 includes the bus integrating processor 120 for handling the PCI bus, a CPU bus processor (not shown) for handling the bus between the bus controlling module 110 and the CPU 130, and a memory unit bus processor (not shown) for handling the bus between the bus controlling module 110 and the memory unit 140.

The bus integrating processor 120 is mounted in the bus controlling module 110, and comprises a PCI Cycle Frame pin (FRAME) 111 and at least one CardBus Cycle Frame pin (CFRAME) 112. Based on different Cycle Frame pins, the bus integrating processor 120 or a master device can access a corresponding PCI/cardbus target device through the same address bus, data bus and control bus exclusive of Cycle Frame signals. That is, the PCI Cycle Frame pin 111 initiates data transmission between a PCI master device and another PCI target device, and the CardBus Cycle Frame pin 112 initiates data transmission between a CardBus master device and another CardBus target device.

The CPU 130 is used to provide functions of accessing, decoding and executing commands for the electronic product. The necessary data can be sent and received from other resources through data transmission paths such as the CPU bus processor between the bus controlling module 110 and the CPU 130 as described above.

The memory unit 140 provides fast data access for other modules or units in the electronic product, and can be a random access memory (RAM) such as a dynamic random access memory (DRAM), synchronous dynamic random access memory (SDRAM), or double data rate synchronous dynamic random access memory (DDR-SDRAM), etc. Similarly to the CPU 130, data can be sent and received from other resources through data transmission paths such as the memory unit bus processor between the bus controlling module 110 and the memory unit 140 as described above.

The PCI bus 150 in this embodiment is of a PCI local bus architecture, which is respectively connected to PCI slots 151, 152 and a PCMCIA standard CardBus slot 153. The PCI slots 151, 152 allow users to install a network card 154 and a display card 155 compatible with the PCI data transmission standard therein, and the PCMCIA standard CardBus slot 153 accommodates a wireless network card 156 compatible with the PCMCIA standard. It should be noted that in this embodiment, in order to clarify the technical features of the present invention, the PCI bus 150 refers to data transmission lines apart from the PCI Cycle Frame pin 111 and the CardBus Cycle Frame pin 112, and is different from the conventional PCI bus including all data transmission lines.

Accordingly, at least the following signal I/O pins are provided for the bus controlling module 110: the PCI Cycle Frame pin 111 that initiates data transmission between a PCI device and another PCI device; and the CardBus Cycle Frame pin 112 that initiates data transmission between a CardBus device and another CardBus device. The following signal I/O pins are further provided between the bus controlling module 110 and the PCI bus 150:
(1) Clock signal pin (CLK) for allowing timing signals to be received by the peripheral devices;
(2) Cycle Frame pin (FRAME) driven by the current master device to indicate the beginning and duration of an access;
(3) Initiator Ready pin (IRDY) for allowing a master device to send a signal informing a target device that it is ready to receive or transmit data;
(4) Target Ready pin (TRDY) for allowing the target device to send a signal informing the master device that it is ready to transmit or receive data;
(5) Device Select pin (DEVSEL) for allowing the target device to send a signal informing the master device that the target device has decoded its address as the target of the current access;
6) Stop pin (STOP) for allowing the target device to send a signal to stop data transmission;
(7) Address and Data pins (AD) for transmitting address and data signals; and
(8) Bus Command and Byte Enables pins (C/BE) for allowing the master device to send transmitting bus command and data byte enables signals.

It should be noted that in this embodiment, except for the CardBus Cycle Frame pin 112, all other pins are functionally compatible with the pins of the conventional PCI local bus. In addition, only the pins that are related to the bus integrating system in the present invention are shown, and all the other pins are compatible with the PCI local bus standard and thus not to be further described herein.

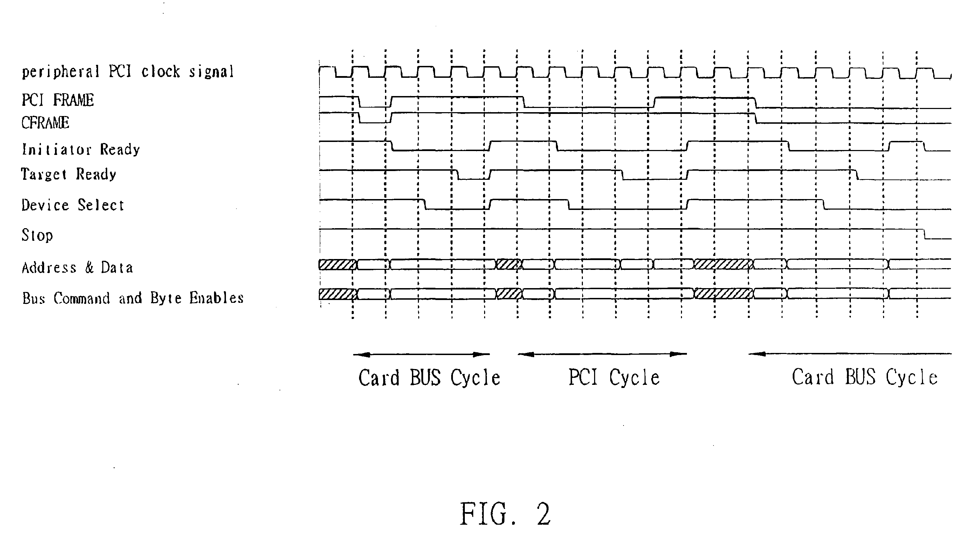

Refer to Fig. 2 showing a waveform diagram of the bus controlling module 110 during data transmission with the peripheral devices.

As described above, in this embodiment, if the wireless network card 156 needs to access data from the memory unit 140, the wireless network card 156 is viewed as the CardBus master device, and the bus integrating processor 120 is viewed as the CardBus target device. When the wireless network card 156 generates a low potential signal to the CardBus Cycle Frame pin 112 and inputs a read command to the C/BE pins, the read transaction is starting. Then, the IRDY pin is asserted to indicate that it is ready for receive data. The responding target device, i.e. the bus integrating processor 120, recognizes the transaction and asserts the DEVSEL pin. At the same time, the bus integrating processor 120 sends a read request to the memory unit 140 based on the address transmitted from the wireless network card 156. When the read data return from the memory unit 140, the bus integrating processor 120 asserts the TRDY signal and inputs the data to the AD bus, such that the wireless network card 156 gets the data from the AD bus currently. Then the wireless network card 156 deasserts the CardBus Cycle Frame pin 112 and finishes the transaction.

Accordingly, if another network card 154 needs to read data from the memory unit 140, the network card 154 is viewed as the PCI master device, and the bus integrating processor 120 is viewed as the PCI target device. When the network card 154 asserts a low potential signal to the PCI Cycle Frame pin 111 and inputs a read command to the C/BE pins, the read transaction is starting. Then the IRDY pin is asserted to indicate that it is ready for receive data. The responding target device, i.e. the bus integrating processor 120, recognizes the transaction and asserts the DEVSEL pin. At the same time, the bus integrating processor 120 sends a read request to the memory unit 140 based on the address transmitted from the network card 154. When the read data return from the memory unit 140, the bus integrating processor 120 asserts the TRDY signal and inputs the data to the AD bus, such that the network card 154 gets the data from the AD bus currently. Then the network card 154 deasserts the PCI Cycle Frame pin 111 and finishes the transaction.

The bus integrating processor 120 of the bus controlling module 110 receives data access requests from peripheral devices with different bus data transmission standards, and allows data access according to the data transmission standards of the peripheral devices.

Furthermore, the bus integrating processor 120 monitors the data transmission conditions of the PCI bus, allowing peripheral devices to transmit data under different bus standards without bus conflict.

The bus integrating system only requires the CardBus Cycle Frame pin (CFRAME) to be added to the bus integrating processor 120 that can thus be connected to peripheral devices of the CardBus standard. In other words, by using the bus integrating processor 120, a plurality of CardBus standard peripheral devices can transmit data via a single bus interface. It is similar to the multiplexing technique used by the peripheral device bus that allows more than one electronic signal to exist on a bus.

Therefore, the bus integrating system in the present invention not only allows bus architectures with different data transmission standards to control data access of peripheral devices through a single bus and an integrating bus controlling module, but also allows a bus architecture that originally transmits data in a point-to-point manner to control data access of the peripheral devices in a shared manner via a single bus using an integrating bus controlling module. Thereby, the hardware space occupied and the manufacturing costs can be reduced.

Furthermore, when the bus integrating system in the present invention is applied to the peripheral devices of the CardBus standard, the number of CardBus Cycle Frame pin (CFRAME) can be adjusted according to the number of CardBus peripheral devices, and the number of CardBus peripheral devices depends on the requirements of users. In another perspective, according to the principle of the bus integrating system described above, the bus integrating system is also applicable to a PC with only a few CardBus peripheral devices. Thus, data access between the CardBus peripheral devices and other peripheral devices can be performed using the plurality of CardBus Cycle Frame pins corresponding to the number of CardBus peripheral devices.

Additionally, the bus integrating system in the present invention can be integrated in an IC (integrated circuit) chip, so as to provide an efficient bus integration solution to various kinds of electronic devices.

## Claims

1. A bus integrating system applicable to a data processing system, for allowing peripheral devices of different data transmission standards, which are connected to the data processing system, to perform data transmission on bus architectures with different transmission standards and similar transmission protocols via a single bus integrating processing mechanism, the bus integrating system comprising:
a bus controlling module comprising one or more bus processors each connected to a corresponding one of the peripheral devices, and according to data access request signals sent from the peripheral devices, the bus controlling module for enabling the one or more bus processors corresponding to the data access request signals to perform data access so as to provide data transmission between the bus processors; and
a bus integrating processor comprising at least one first bus data access signal pin, at least one second bus data access signal pin, and other related shared signal pins, for allowing the bus controlling module to control the peripheral devices connected to buses of a first data transmission standard and a second data transmission standard to perform data access and exchange with the bus processors of the same or different data transmission standards via the bus integrating processor, so as to integrate bus standards of shared architecture and point-to-point architecture, two or more bus standards of shared architecture, or two or more bus standards of point-to-point architecture.

2. The bus integrating system of claim 1, wherein the bus of the first data transmission standard is a PCI (peripheral component interconnect) bus, and the first bus data access signal pin is a Cycle Frame pin of the PCI bus standard.

3. The bus integrating system of claim 1 or claim 2, wherein the first data transmission standard is a CardBus standard, and the first bus data access signal pin is a CardBus Cycle Frame pin of the CardBus standard.

4. The bus integrating system of any of the preceding claims, wherein the second data transmission standard is a CardBus standard, and the second bus data access signal pin is a CardBus Cycle Frame pin of the CardBus standard.

5. The bus integrating system of claim 2, wherein the PCI bus supports full or partial functionality defined in the standard.

6. The bus integrating system of claim 3, wherein the bus of the CardBus standard supports full or partial functionality defined in the standard.

7. The bus integrating system of claim 4, wherein the bus of the CardBus standard supports full or partial functionality defined in the standard.

8. The bus integrating system of any of the preceding claims, wherein the bus of the first data transmission standard has a bus standard of shared architecture.

9. The bus integrating system of any of claims 1 to 7, wherein the bus of the first data transmission standard has a bus standard of point-to-point architecture.

10. The bus integrating system of any of the preceding claims, wherein the bus of the second data transmission standard has a bus standard of shared architecture.

11. The bus integrating system of any of claims 1 to 9, wherein the bus of the second data transmission standard has a bus standard of point-to-point architecture.

12. The bus integrating system of any of the preceding claims, wherein the bus integrating processor supports full or partial functionality of the first data transmission standard of the bus.

13. The bus integrating system of any of claims 1 to 11, wherein the bus integrating processor supports full or partial functionality of the second data transmission standard of the bus.

14. The bus integrating system of claim 9, wherein when the bus of the first data transmission standard has the bus standard of point-to-point architecture, the number of its data access signal pins is adjusted depending on the number of the corresponding peripheral devices, so as to allow the peripheral devices to send the data access request signals via the corresponding data access signal pins or allow other devices to send the data access request signals to the peripheral devices via the corresponding access signal pins.

15. The bus integrating system of claim 11, wherein when the bus of the second data transmission standard has the bus standard of point-to-point architecture, the number of its data access signal pins is adjusted depending on the number of the corresponding peripheral devices, so as to allow the peripheral devices to send the data access request signals via the corresponding access signal pins or allow other devices to send the data access request signals to the peripheral devices via the corresponding accessing signal pins.

16. The bus integrating system of any of the preceding claims, which is applied to an electronic product.

17. The bus integrating system of claim 16, wherein the electronic product is one selected from the group consisting of a personal computer, notebook computer, palm computer, personal digital assistant, flat panel computer, server system, workstation, digital home appliance, mobile equipment, communication equipment, multimedia equipment, medical equipment, and automated control equipment.

18. The bus integrating system of any of the preceding claims, wherein the bus controlling module is integrated in an IC (integrated circuit) chip.

19. The bus integrating system of any of the preceding claims, wherein the bus integrating processor is integrated in an IC chip.

20. The bus integrating system of any of claims 1 to 18, wherein the bus integrating processor is integrated in the bus controlling module.

21. The bus integrating system of any of the preceding claims, wherein the bus controlling module and the bus integrating processor are independent IC chips.
